(19)

Europäisches
Patentamt
European
Patent Office
Office européen
des brevets

(11) **EP 2 492 146 B1**

(12) **EUROPEAN PATENT SPECIFICATION**

(45) Date of publication and mention
of the grant of the patent:
**09.04.2014   Bulletin 2014/15**

(51) Int Cl.:
***B60R 5/04*** (2006.01)

(21) Application number: **11156032.2**

(22) Date of filing: **25.02.2011**

(54) **Automatic parcel shelf**

Automatisches Paketregal

Plage arrière automatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2012   Bulletin 2012/35**

(73) Proprietor: **National Electric Vehicle Sweden AB
461 38 Trollhättan (SE)**

(72) Inventors:
• **Barbunopulos, Andreas
   451 91, UDDEVALLA (SE)**

• **Fredriksson, Bo
   461 41, TROLLHÄTTAN (SE)**

(74) Representative: **Edlund, Fabian et al
Awapatent AB
P.O. Box 11 394
404 28 Göteborg (SE)**

(56) References cited:
**EP-A1- 0 332 059          EP-A1- 1 942 032
DE-A1- 19 735 439         DE-A1- 19 856 741
DE-B3-102007 005 185    DE-U1- 7 808 131**

Printed by Jouve, 75001 PARIS (FR)

## Description

Field of the invention

The present invention relates to a parcel shelf for use in a vehicle, and more specifically to an automatic parcel shelf.

Background of the invention

The automotive market of today demands for continuously increased functionality in practically all aspects of the vehicle. One of these aspects is the boot of the vehicle, which is important as it is needed to be able to stow a satisfactory amount of luggage. It is therefore important to minimise the amount of space at the back of the vehicle that may not be used for stowing luggage, see e.g. DE-B-10 2007 005 185.

The parcel shelf used in vehicles of today, and more particularly hatchback-type of vehicles, are most often designed to be tilted when opening the boot lid of the vehicle. This may be accomplished by means of two straps connected from the parcel shelf to the boot lid. In order to, for example, stow luggage that does not fit in the boot it may be necessary to stow from the rear side of the vehicle and into the passenger compartment. The parcel shelf then may need to be manually unassembled from the boot lid in order to stow such luggage. Furthermore, the design of the parcel shelf may also reduce the overall stowing possibilities of the vehicle, such that the vehicle may not be able to use its full capacity for stowing luggage.

Therefore, there is a need for a parcel shelf which is more practical in its design and allows for simplified stowing of luggage in the boot. Furthermore, there is a need of minimising the amount of space in the back of the vehicle that may not be used for stowing luggage.

Summary of the invention

Based on the above, an object of the present invention is thus to provide a parcel shelf having improved stowing capabilities as well as being more practical in its design. The invention is based on the understanding that a parcel shelf with increased functionality will provide a vehicle more suitable for stowing luggage and which is more convenient to handle.

According to an aspect of the invention, there is provided a parcel shelf which is adapted to be located at a rear end of a vehicle having a boot lid, the parcel shelf comprises a tiltable portion hingedly connected at its front end in relation to a driving direction of the vehicle, wherein at least one springing element is arranged at the front end of the tiltable portion, and the tiltable portion is arranged to tilt upon actuation of the springing element.

Advantages with the present invention include, for example, that the parcel shelf may be arranged to automatically tilt by means of actuating the springing element, thereby reducing the need of straps between the parcel shelf and the boot lid. This may increase the functionality of the parcel shelf and the boot as such, since the absence of straps increase the stowing capabilities of the vehicle. Also, the absence of straps further increases the feeling of quality of the vehicle.

According to an embodiment of the present invention, the springing element may be in a biased condition when the tiltable portion is in a non-tilted condition.

Hereby, the actuation of the springing element is achieved by releasing the springing element from its biased condition. Thereby, the springing element reduces its biased condition the more the tiltable portion tilts. This provides a springing element which may be easy to control and may be functional for tilting the tiltable portion of the parcel shelf.

Furthermore, at least a portion of the rear end of the parcel shelf is in abutment with a portion of the boot lid when the boot lid is in a closed condition.

This provides for a parcel shelf that may be in mechanical connection with the boot lid. An advantage is that noise and sound from the boot to the passenger compartment may be reduced. Also, noise due to vibration of the parcel shelf may be reduced by having a portion of the parcel shelf in abutment with the boot lid.

According to an embodiment, the springing element may be actuated by means of transferring the boot lid from a closed condition to an opened condition.

The terminology "transferring of the boot lid" should in the following be understood to mean opening or closing the boot lid, i.e. from a closed condition to an opened condition, or vice versa.

An advantage is that the parcel shelf may be automatically tilted when opening the boot lid, thus providing full access to the boot of the vehicle when the boot lid is opened. As the springing element is actuated when the boot lid is opened, the need of straps may even further be reduced. This may yet further provide a "cleaner" and more attractive impression of the vehicle as such.

According to an embodiment, the tiltable portion may be transferred from a tilted condition to a non-tilted condition by means of closing the boot lid.

Hereby, the tiltable portion, and thereby also the parcel shelf, is in a non-tilted condition when the boot lid is closed, thus providing a safe stowing of the luggage in the boot, as luggage stowed in the boot is separated from the passenger compartment by means of the parcel shelf.

In prior solutions having straps, these straps have to be unhooked from hooks coupled to the boot lid when providing the tiltable portion of the parcel shelf in a non-tilted condition, and at the same time having the boot lid in an opened condition. The straps thereby hangs free and can be squeezed between the boot lid and the vehicle when closing the boot lid. A further advantage is thus a minimized risk of breaking important and functional parts of the parcel shelf.

Hereby, the tiltable portion may be transferred from a tilted condition to a non-tilted condition by means of the force from the boot lid. Although the tiltable portion is transferred to a closed condition by means of closing the boot lid, the extra inertia forces exerted on the boot lid may not be noticeable for the person closing the boot lid, due to design and choice of springing element.

Another advantage is that the tiltable portion may be in abutment with the boot lid that remains when the boot lid is closed, and thereby may prevent noise as describe above.

Furthermore, the tiltable portion may be divided into two sections by means of a joint, such that a first section of the tiltable portion is rotatably mounted to a second section of the tiltable portion at the joint.

This provides a parcel shelf which may be foldable at the joint. An advantage is that the parcel shelf may be easy to stow and put in other places of the vehicle if the luggage, for example, needs more space than available in the boot. Furthermore, another advantage is that the parcel shelf may be folded and thereby be reduced in size, which may come in handy if, for example, transporting dirty luggage. Hereby the dirt from the luggage may stick on the lower surface of the parcel shelf, i.e. the surface which in normal cases is facing the boot and is not visible to the user.

According to an embodiment, the parcel shelf may further comprise a locking device arranged to lock the tiltable portion in a non-tilted condition irrespectively of the condition of the boot lid.

An advantage is that the parcel shelf may be put in a non-tilted condition when the boot lid is opened or being opened. This may be preferable when, for example, transporting smaller luggage on the parcel shelf, which may fall into the passenger compartment if the parcel shelf is tilted when the boot lid is opened.

Furthermore, the springing element may be embedded within the parcel shelf.

Having the springing element embedded in the parcel shelf may further increase the stowing possibilities of the vehicle, as all space may be available for stowing, i.e. there are no springing elements taking up space in the boot or on top of the parcel shelf. Also, embedded springing elements may further provide a feeling of quality of the vehicle.

Still further, the springing element may act upon a force receiving means by a compression force F in order to tilt the tiltable portion, so that:

$$F > \frac{m \times g \times L}{W \times n}$$

wherein:

F = compression force of the springing element,
m = mass of the tiltable portion,

g = gravitational constant,
L = length between centre of gravity of the tiltable portion and the front end of the tiltable portion,
W = diagonal distance between the hinge connection of the tiltable portion and a point of action between the springing element and the force receiving means, and
n = number of springing elements.

Hereby, the force of the springing element may be controlled, thus allows for choosing the correct type of springing element depending on, for example, weight or dimensions of the parcel shelf. Furthermore, by controlling the force of the springing elements, a parcel shelf may also be provided that does not tilt if heavy luggage is placed on the parcel shelf, which otherwise may fall into the passenger compartment when, for example, opening the boot lid or in other ways actuating the springing elements.

According to an embodiment, the springing element is a gas spring.

A gas spring is simple in its design and may be provided in a wide range in terms of force for tilting the tiltable portion. Hereby, depending on the size and weight of the tiltable portion, a suitable gas spring may be chosen.

Furthermore, the force receiving means may be an at least partially concave surface.

Hereby, the gas spring may act on a surface providing a suitable lever arm for tilting the tiltable portion.

Still further, the springing element may be a torsion spring.

A torsion spring is simple in its design and may be provided in several different sizes that may be suited for different size and weight of the parcel shelf.

According to an embodiment, a vehicle may be provided with the parcel shelf as described above. Furthermore, the vehicle may be provided with a parcel shelf having a springing element adapted to tilt the tiltable portion in a motion slower than the motion of transferring the boot lid from a closed condition to an opened condition.

An advantage is that the parcel shelf may be tilted in a controlled manner, providing a feeling of control and quality of the vehicle. Furthermore, tilting the tiltable portion in a slower motion than the boot lid may also prevent accidents, such as, for example, objects being thrown into the passenger compartment or people being hit by the parcel shelf when opening the boot lid.

Brief description of the drawings

The above, as well as additional objects, features and advantages of the present invention, will be better understood through the following illustrative and non-limiting detailed description of preferred embodiments of the present invention, with reference to the appended drawings, wherein:

Fig. 1 illustrates a perspective view of the parcel shelf according to an embodiment of the invention,

Fig. 2 schematically illustrates a cross-sectional side view of a vehicle having the parcel shelf according to the embodiment illustrated in Fig. 1, wherein the boot lid of the vehicle is in a closed condition,

Fig. 3 schematically illustrates a perspective view of the vehicle having the parcel shelf according to the embodiment of Fig. 1, here illustrated in a tilted condition and the boot lid in an opened condition,

Fig. 4 illustrates a similar view as Fig. 3 but with the parcel shelf in a non-tilted condition,

Figs. 5a - 5b illustrate cross-sectional side views of an embodiment of the parcel shelf having a gas spring at the front end of the parcel shelf, and

Figs. 6a — 6b illustrate cross-sectional side views of an embodiment of the parcel shelf having a gas spring at the joint connection of the parcel shelf.

<u>Detailed description of preferred embodiments</u>

The present invention will now be described more fully hereinafter with reference to the accompanying drawings, in which currently preferred embodiments of the invention are shown. The invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

In the following description, the present invention is described with reference to a parcel shelf 100 for use in a vehicle 300, and more specifically to a parcel shelf 100 for use in a hatchback-type of vehicle. The parcel shelf 100 may, however, also be used in other types of vehicles, such as, for example, a saloon type of vehicle.

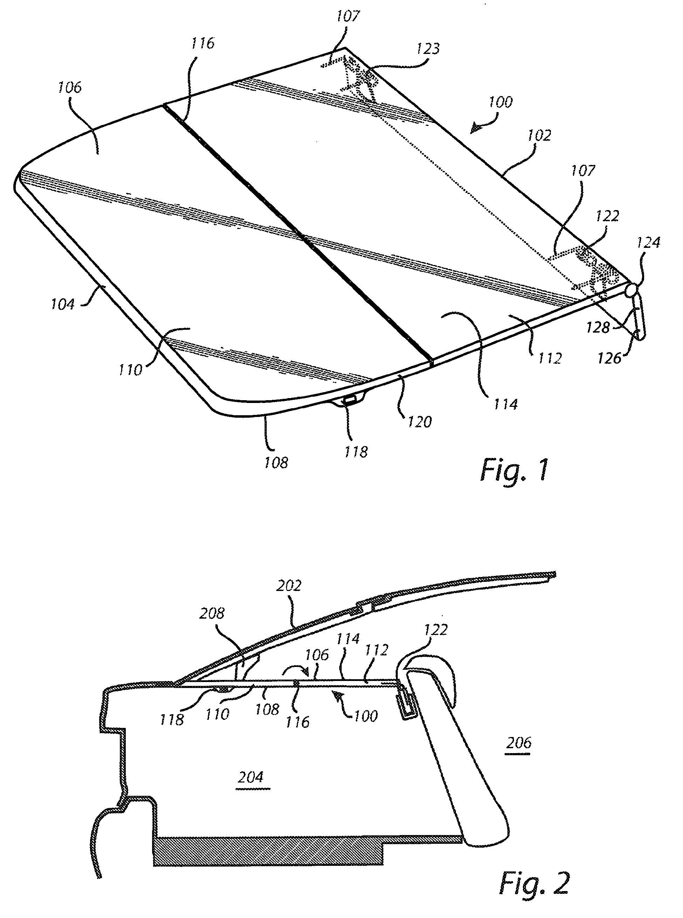

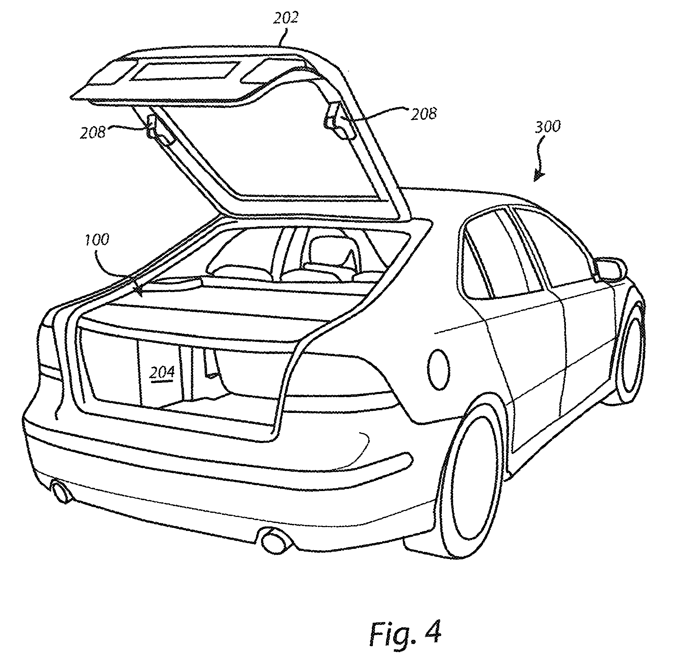

Fig. 1 illustrates a parcel shelf 100 in a non-tilted condition according to an embodiment of the present invention. The terminology "non-tilted" should in the following and throughout the application be understood to mean a closed condition of the parcel shelf, i.e. the parcel shelf is in a horizontal position and, when the boot lid 202 is closed, provides a boot 204 which may not be visibly available for people standing outside the vehicle 300. The terminology "tilted" should thus be understood to mean an opened condition of the parcel shelf 100, i.e. when the parcel shelf 100 is tilted and may provide simplified stowing of the boot 204. Furthermore, the parcel shelf 100 has a front end 102 and a rear end 104, which is referred to in relation to a normal driving direction of the vehicle. The parcel shelf 100 further comprises an upper surface 106 and a lower surface 108, wherein the lower surface 108 is facing the boot 204 of the vehicle in a normal driving condition, i.e. when the boot lid 202 of the vehicle 300 is closed and the parcel shelf 100 is in a non-tilted condition. The upper surface 106 is thus the opposite surface of the parcel shelf as seen in relation to the lower surface 108. Furthermore, according to the embodiment illustrated in Fig. 1, the parcel shelf 100 is divided into a first section 110, here shown as a rear section, and a second section 112, here shown as a front section of the parcel shelf 100. The front section 112 and the rear section 110 of the parcel shelf 100 are in this embodiment corresponding to the tiltable portion 114 of the parcel shelf 100 as referred to in the claims. The terminology front and rear is again referred to in relation to a normal driving direction of the vehicle in the same manner as the front end 102 and rear end 104 of the parcel shelf 100 described above. The rear section 110 is rotatably mounted to the front section 112 by means of a joint connection 116. Hereby, the rear section 110 can be folded around the joint connection 116, such that the rear section 110 overlies the front section 112. The parcel shelf 100 also comprises locking devices 118, here illustrated at the side 120 of the parcel shelf 100. The locking devices 118 are arranged to lock the parcel shelf 100 to the structure of the vehicle if it is needed or desired to, for example, have the parcel shelf 100 in a non-tilted condition when the boot lid 202 is in an opened condition. This may be accomplished by, for example, a snap connection arranged in the boot 204 (not illustrated here), locking the locking devices 118 to the structure of the vehicle 300. However, the locking devices 118 may be provided at other positions of the parcel shelf 100 and with other types of locking mechanisms than a snap connection. For example, the locking devices 118 may be provided at the rear end 104 of the parcel shelf 100 and the locking mechanism may also be a locking pin, arranged to lock the locking device 118 to the structure of the vehicle 300. The procedure of locking the parcel shelf 100 to the structure of the vehicle 300 when the boot lid 202 is in an opened condition will be discussed in further detail below in relation to Fig. 4.

Still further, springing elements 122 are arranged at the front end 102 of the parcel shelf 100, here illustrated by a torsion spring type of springing element. According to the embodiment illustrated in Fig. 1, the torsion springs 123 are arranged to be hingedly connected at a hinge 124 between a force receiving means 107 at the front end 102 of the parcel shelf 100 and a non-movable part 126 of the parcel shelf 100. The force receiving means 107 is in the current embodiment a portion of the parcel shelf 100 which is in abutment with the torsion spring 123. In the embodiment illustrated in Fig. 1, the non-movable part 126 is, when the parcel shelf is in a non-tilted condition, situated below the front section 112. The non-movable part 126 may be in fixed connection to the structure of the vehicle 300, to a portion of the boot or the rear side of the back seat, etc. (not illustrated here). However, the non-movable part 126 may also be a portion of the boot 204, such that the torsion spring 123 is connected between the front end 102 of the parcel shelf 100 and the portion of the boot 204. Furthermore, when the parcel shelf 100 is in a non-tilted condition, as illustrated in Fig. 1, the torsion springs 123 are arranged in a biased condition.

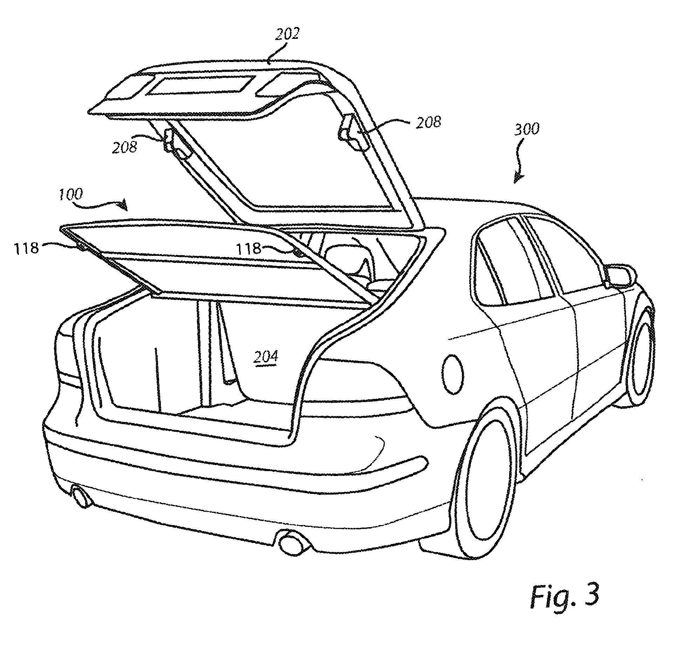

Now referring to Fig. 2, illustrating a cross-sectional side view of the parcel shelf of Fig. 1, mounted in the vehicle 300. The boot lid 202 is in a closed condition and the parcel shelf 100 is in a non-tilted condition, i.e. the parcel shelf 100 separates the boot 204 from the passenger compartment 206 of the vehicle 300. However, it should be noted that the invention is not limited to the embodiment of a parcel shelf 100 that fully separates the boot 204 from the passenger compartment 206 of the vehicle 300; the parcel shelf 100 may also when, for example, being in a non-tilted condition, semi-separate the boot 204 from the passenger compartment 206, such that the boot 204 may be at least partially visible from outside the vehicle 300 when the boot lid 202 is in a closed condition. Furthermore, when the parcel shelf 100 is in a non-tilted condition, the torsion springs 123 are in a biased condition as described in relation to Fig. 1. A portion of the parcel shelf 100 is thus in abutment with two consoles 208 arranged at the inner side of the boot lid 202 at each side thereof. This may reduce noise due to vibrations of the parcel shelf 100, as the parcel shelf will be in a biased connection, and in abutment, with the boot lid 202, providing a compression force between the parcel shelf 100 and the boot lid 202. Furthermore, when opening the boot lid 202, the torsion springs 123 will be released from their fully biased condition and the parcel shelf 100 will tilt at the hinge connection 124. This provides the boot lid 202 in an opened condition and the parcel shelf 100 in a non-tilted condition, as illustrated in the embodiment of Fig. 3. When opening the boot lid 202, the parcel shelf 100 may be transferred from a non-tilted condition to a tilted condition slower than transferring the boot lid 202 from a closed condition to a fully opened condition, which is controlled by the choice of torsion spring 123. This will provide a premium feeling of the vehicle, i.e. a feeling of increased standard. However, the parcel shelf 100 may also be arranged to tilt in such a manner that it is in abutment with the boot lid 202 throughout the entire opening of the boot lid 202, *i.e.* the parcel shelf 100 may be tilted in the same speed as the boot lid 202.

As is further illustrated in Fig. 3, when the parcel shelf 100 is in a tilted condition, the lower surface 108 of the parcel shelf 100 is facing the rear exterior of the vehicle 300, i.e. the space from where to stow luggage into the boot 204 of the vehicle 300. The lower surface 108 of the parcel shelf 100 may therefore preferably be designed in a material resistant to wear, and/or which is easy to clean, as the lower surface 108 of the parcel shelf 100 may be exposed to, for example, dirty luggage stowed in the boot.

When the parcel shelf 100 is in a tilted condition as illustrated in Fig. 3, it can be transferred to a non-tilted condition by closing the boot lid 202. When the boot lid 202 is transferred from an opened condition to a closed condition, the two consoles 208 on the boot lid 202 will abut the parcel shelf 100, which also will be transferred to a non-tilted condition, providing the parcel shelf 100 and the boot lid 202 in the condition as illustrated and discussed in relation to Fig. 2.

However, the parcel shelf 100 may also be transferred to a non-tilted condition still having the boot lid 202 in an opened condition, which is illustrated in Fig. 4. This may be accomplished by manually transferring the parcel shelf 100 from a tilted condition to non-tilted condition. When the parcel shelf 100 is in a non-tilted condition it can be fixated to the structure of the vehicle 300 by means of the locking devices 118, holding the parcel shelf 100 secured in the non-tilted condition. Hereby, it is possible to, for example, stow luggage onto the parcel shelf 100 after stowing luggage in the boot 204 of the vehicle 300. It should, however, be noted that the position and configuration of the locking devices 118 are not limited to the disclosed embodiments of the present invention.

Embodiments of the parcel shelf 100 will now be discussed with reference to Figs. 5a - 6b, illustrating detailed cross-sectional side views of the parcel shelf 100 having gas springs 500 as springing elements 122 for tilting the parcel shelf 100. It should be noted that elements having the same functionality as described above in relation to Fig. 1 — 4 will be denoted with the same reference character and terminology, unless indicated differently. Starting with Fig. 5a, the gas springs 500 are arranged at a non-movable part 502 at the front end 102 of the parcel shelf 100, here illustrated to be fixated in a console 504. The console 504 may be connected to a portion of the boot 204 of the vehicle or to the structure of the vehicle (not shown here). In further detail, the front section 112 is hingedly connected at the hinge 124 between the front section 112 and the non-movable part 502 of the parcel shelf 100. The hinge 124 is arranged to tilt the front section 112 and the rear section 110 of the parcel shelf 100 upon actuation of the gas spring 500, which will be further described in relation to Fig. 5b below. The front section 112 and the rear section 110 in the current embodiment together correspond to the tiltable portion 114 as referred to in the clams. Furthermore, there is provided a force receiving means 507 on the front section 112, adjacent the hinge 124 separating the front section 112 from the non-movable part 502 of the parcel shelf 100. The force receiving means 507 may have a concave surface 508 adapted to receive a compression force from the gas spring 500. The concave surface 508 may enable an increased lever arm for the gas spring 500, such that tilting of the parcel shelf 100 may be carried out in an optimized manner. Furthermore, the force receiving means 507 may also, for example, be an integrated part of the front section 112 or a part separately connected to the front section 112. Still further, the front section 112 and the rear section 110 is in the embodiment of Fig. 5 separated by a joint connection 116, such that the rear section 110 can be folded at the joint connection 116 in order to overlie the front section 112, as described in relation to Fig. 1.

When the gas spring 500 is actuated by, for example, opening the boot lid 202 or releasing the connection devices 118, as described above, the front section 112 and the rear section 110 of the parcel shelf 100 tilts, as illustrated in Fig. 5b. The gas spring 500 then expands and the compression force exerted on the force receiving means 507 enables the front section 112 and the rear section 110 of the parcel shelf 100 to tilt. The rear section 110 of the parcel shelf may again, if desired, be folded at the joint connection 116 such that the rear section 110 overlies the front section 112. In order to provide the front section 112 and the rear section 110 in a non-tilted condition, the same procedure as described in relation to Fig. 2 and Fig. 4 may also be executed for this embodiment.

Now referring to Fig. 6a, illustrating an embodiment of the parcel shelf 100 having the gas spring 500 arranged at the joint connection 116, such that the first section 112 is arranged to tilt when the gas spring 500 is actuated. The rear section 110 thus corresponds to the tiltable portion 114 as referred to in the claims and the joint connection 116 correspond to the hinge connection 124 as referred to in relation to Figs. 1 — 5b. The parcel shelf 100 is connected to the boot 204 or the structure of the vehicle 100 at the front end 102 of the parcel shelf 100 (not illustrated here). The gas spring 500 is connected to the non-movable part 602 of the parcel shelf 100 and the force receiving means 507 is arranged at a front end of the rear section 110 of the parcel shelf 100. When the gas spring 500 is actuated, the rear section 110 tilts, as illustrated in Fig. 6b. In more detail, the gas spring 500 is, when being actuated, expanded and the compression force exerted on the force receiving means 507 enables the rear section 110 to tilt.

It should be noted that the embodiment of Figs. 6a — 6b is just as applicable by having the gas spring 500 arranged at the rear section 110 and the force receiving means 507 arranged at the front section 112. Furthermore, a torsion spring 123 or any other springing elements suitable may be provided at the joint connection 116 separating the front section 112 and rear section 110, and the embodiment illustrated in Figs. 6a - 6b is thus not limited to a gas spring 500.

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims. For example, when the boot lid 202 is in a closed condition, the parcel shelf 100 may just as well abut a portion of the back window of the boot lid 202 or any other part of the rear end of the boot lid 202, thereby reducing the need of consoles 208. Furthermore, the invention is not limited to a parcel shelf 100 having a joint connection 116; the parcel shelf 100 may just as well be constructed in one piece, such that only one section is provided. Also, the number of springing elements 122 used is not limiting, which for the skilled person would be obvious that by providing a larger number of springs will increase the force for tilting the tiltable portion 114. Still further, although the parcel shelf 100 has been described having a first section (rear section) and a second section (front section), it should be noted that also a third section may be provided between the first section and the second section. In such a case, the joint connection 116 may be provided between the first section and the third section, and a springing element 122 may be provided between the second section and the third section. It should also be noted that the position of the joint connection 116 illustrated Figs. 1 - 6b are not limited to the disclosed embodiments of the present invention. The joint connection 116 may thus be located anywhere along the side 120 of the parcel shelf 100.

**Claims**

1. A parcel shelf (100) being adapted to be located at a rear end of a vehicle (300) having a boot lid (202), said parcel shelf (100) comprises a tiltable portion (114) hingedly connected at its front end (102) in relation to a driving direction of said vehicle (300), said tiltable portion (114) being transferrable between a non-tilted condition and a tilted condition, wherein at least one springing element (122) is arranged at said front end (102) of said tiltable portion (114), and said springing element is arranged to actuate said tiltable portion (114) in such a way that the tiltable portion (114) is transferred from said non-tilted condition to said tilted condition, wherein the tiltable portion (114) is adapted to abut the boot lid (202) when the boot lid (202) is transferred from an opened condition to a closed condition thereby causing said tiltable portion to be transferred from said tilted condition to said non-tilted condition by means of a force from abutting the boot lid (202).

2. A parcel shelf (100) as claimed in claim 1, wherein said springing element (122) is in a biased condition when said tiltable portion (114) is in a non-tilted condition.

3. A parcel shelf (100) as claimed in claim 1 or 2, wherein at least a portion at the rear end (104) of said parcel shelf (100) is in abutment with a portion (208) of said boot lid (202) when said boot lid (202) is in a closed condition.

4. A parcel shelf (100) as claimed in claim 3, wherein said springing element (122) is actuated by means of transferring said boot lid (202) from a closed condition to an opened condition.

**5.** A parcel shelf (100) as claimed in any one of the preceding claims, wherein said tiltable portion (114) is transferred from a tilted condition to a non-tilted condition by means of closing said boot lid (202).

**6.** A parcel shelf (100) as claimed in any one of the preceding claims, wherein said tiltable portion (114) is divided into two sections by means of a joint (116), such that a first section (110) of said tiltable portion (114) is rotatably mounted to a second section (112) of said tiltable portion at said joint (116).

**7.** A parcel shelf (100) as claimed in any one of the preceding claims, further comprising a locking device (118) arranged to lock said tiltable portion (114) in a non-tilted condition irrespectively of the condition of said boot lid (202).

**8.** A parcel shelf (100) as claimed in anyone of the preceding claims, wherein said springing element (122) is embedded within said parcel shelf (100).

**9.** A parcel shelf (100) as claimed in anyone of the preceding claims, wherein said springing element (122) acts upon a force receiving means (107, 507) by a compression force F in order to tilt said tiltable portion (114), so that:

$$F > \frac{m \times g \times L}{W \times n}$$

wherein:

F = compression force of said springing element (122),
m = mass of said tiltable portion (114),
g = gravitational constant,
L = length between centre of gravity of said tiltable portion (114) and said front end of said tiltable portion (114),
W = diagonal distance between said hinge connection of said tiltable portion and a point of action between said springing element and said force receiving means, and
n = number of springing elements (122).

**10.** A parcel shelf (100) as claimed in anyone of the preceding claims, wherein said springing element (122) is a gas spring (500).

**11.** A parcel shelf (100) as claimed in claim 10 when depending on claim 9, wherein said force receiving means (507) is an at least partially concave surface (508).

**12.** A parcel shelf (100) as claimed in anyone of claims 1 to 9, wherein said springing element (122) is a torsion spring (123).

**13.** A vehicle (300) provided with a parcel shelf (100) as claimed in anyone of the preceding claims.

**14.** A vehicle (300) according to claim 13, wherein said springing element (122) is adapted to tilt said tiltable portion (114) in a motion slower than a motion of transferring said boot lid (202) from a closed condition to an opened condition.

**Patentansprüche**

**1.** Kofferraumabdeckung (100), die dafür eingerichtet ist, an einem hinteren Ende eines Fahrzeugs (300) angeordnet zu sein, das eine Heckklappe (202) aufweist, wobei die Kofferraumabdeckung (100) einen schrägstellbaren Abschnitt (114) umfasst, der an seinem im Verhältnis zu einer Fahrrichtung des Fahrzeugs (300) vorderen Ende (102) gelenkig verbunden ist, wobei der schrägstellbare Abschnitt (114) zwischen einem nicht schrägstehenden Zustand und einem schrägstehenden Zustand verlagert werden kann, wobei am vorderen Ende (102) des schrägstellbaren Abschnittes (114) mindestens ein Federelement (122) angeordnet ist und das Federelement dafür angeordnet ist, den schrägstellbaren Abschnitt (114) derart zu betätigen, dass der schrägstellbare Abschnitt (114) aus dem nicht schrägstehenden Zustand in den schrägstehenden Zustand verlagert wird, wobei der schrägstellbare Abschnitt (114) dafür eingerichtet ist, an die Heckklappe (202) anzustoßen, wenn die Heckklappe (202) aus einem geöffneten Zustand in einen geschlossenen Zustand verlagert wird, wodurch bewirkt wird, dass der schrägstellbare Abschnitt (114) mittels einer Kraft aus dem Anstoßen der Heckklappe (202) aus dem schrägstehenden Zustand in den nicht schrägstehenden Zustand verlagert wird.

**2.** Kofferraumabdeckung (100) nach Anspruch 1, wobei sich das Federelement (122) in einem vorgespannten Zustand befindet, wenn sich der schrägstellbare Abschnitt (114) in einem nicht schrägstehenden Zustand befindet.

**3.** Kofferraumabdeckung (100) nach Anspruch 1 oder 2, wobei mindestens ein Abschnitt am hinteren Ende (104) der Kofferraumabdeckung (100) an einen Abschnitt (208) der Heckklappe (202) anstößt, wenn sich die Heckklappe (202) in einem geschlossenen Zustand befindet.

**4.** Kofferraumabdeckung (100) nach Anspruch 3, wobei das Federelement (122) durch das Verlagern der Heckklappe (202) aus einem geschlossenen Zustand in einen geöffneten Zustand betätigt wird.

5. Kofferraumabdeckung (100) nach einem der vorhergehenden Ansprüche, wobei der schrägstellbare Abschnitt (114) durch das Schließen der Heckklappe (202) aus einem schrägstehenden Zustand in einen nicht schrägstehenden Zustand verlagert wird.

6. Kofferraumabdeckung (100) nach einem der vorhergehenden Ansprüche, wobei der schrägstellbare Abschnitt (114) durch ein Gelenk (116) derart in zwei Teilabschnitte geteilt ist, dass ein erster Teilabschnitt (110) des schrägstellbaren Abschnittes (114) am Gelenk (116) drehbar an einen zweiten Teilabschnitt (112) des schrägstellbaren Abschnittes (114) montiert ist.

7. Kofferraumabdeckung (100) nach einem der vorhergehenden Ansprüche, ferner eine Arretiervorrichtung (118) umfassend, die dafür angeordnet ist, den schrägstellbaren Abschnitt (114) ungeachtet des Zustandes der Heckklappe (202) in einem nicht schrägstehenden Zustand zu arretieren.

8. Kofferraumabdeckung (100) nach einem der vorhergehenden Ansprüche, wobei das Federelement (122) in die Kofferraumabdeckung (100) eingebettet ist.

9. Kofferraumabdeckung (100) nach einem der vorhergehenden Ansprüche, wobei das Federelement (122) durch eine Kompressionskraft F auf ein kraftaufnehmendes Mittel (107, 507) wirkt, um den schrägstellbaren Abschnitt (114) schrägzustellen, so dass

$$F = \frac{m \times g \times L}{W \times n}$$

ist,
wobei:

F = Kompressionskraft des Federelements (122),
m = Masse des schrägstellbaren Abschnittes (114),
g = Gravitationskonstante,
L = Länge zwischen dem Schwerpunkt des schrägstellbaren Abschnittes (114) und dem vorderen Ende des schrägstellbaren Abschnittes (114),
W = diagonaler Abstand zwischen der Gelenkverbindung des schrägstellbaren Abschnittes und einem Wirkungspunkt zwischen dem Federelement und dem kraftaufnehmenden Mittel und

n = Anzahl der Federelemente (122).

10. Kofferraumabdeckung (100) nach einem der vorhergehenden Ansprüche, wobei das Federelement (122) eine Gasfeder (500) ist.

11. Kofferraumabdeckung (100) nach Anspruch 10, wenn abhängig von Anspruch 9, wobei das kraftaufnehmende Mittel (507) eine mindestens teilweise konkave Fläche (508) ist.

12. Kofferraumabdeckung (100) nach einem der Ansprüche 1 bis 9, wobei das Federelement (122) eine Torsionsfeder (123) ist.

13. Fahrzeug (300), ausgestattet mit einer Kofferraumabdeckung (100) nach einem der vorhergehenden Ansprüche.

14. Fahrzeug (300) nach Anspruch 13, wobei das Federelement (122) dafür eingerichtet ist, den schrägstellbaren Abschnitt (114) in einer Bewegung schrägzustellen, die langsamer als eine Bewegung des Verlagerns der Heckklappe (202) aus einem geschlossenen Zustand in einen geöffneten Zustand ist.

**Revendications**

1. Plage arrière (100) étant adaptée afin d'être située à une extrémité arrière d'un véhicule (300) ayant une porte de coffre (202), ladite plage arrière (100) comprend une portion inclinable (114) raccordée par charnière à son extrémité avant (102) relativement à une direction de conduite dudit véhicule (300), ladite portion inclinable (114) pouvant être passée d'une condition non inclinée à une condition inclinée, dans laquelle au moins un élément faisant ressort (122) est agencé au niveau de ladite extrémité avant (102) de ladite portion inclinable (114), et ledit élément faisant ressort est agencé de manière à actionner ladite portion inclinable (114) d'une manière telle que la portion inclinable (114) soit passée de ladite condition non inclinée à ladite condition inclinée, dans laquelle la portion inclinable (114) est adaptée afin de buter contre la porte de coffre (202) quand la porte de coffre (202) passe d'une condition ouverte à une condition fermée, en amenant ainsi ladite portion inclinable à passer de ladite condition inclinée à ladite condition non inclinée au moyen d'une force de butée contre la porte de coffre (202).

2. Plage arrière (100) selon la revendication 1, dans laquelle ledit élément faisant ressort (122) est dans une condition tendue quand ladite portion inclinable (114) est dans une condition non inclinée.

**3.** Plage arrière (100) selon les revendications 1 ou 2, dans laquelle au moins une portion au niveau de l'extrémité arrière (104) de ladite plage arrière (100) est en butée contre une portion (208) de ladite porte de coffre (202) quand ladite porte de coffre (202) est dans une condition fermée.

**4.** Plage arrière (100) selon la revendication 3, dans laquelle ledit élément faisant ressort (122) est actionné au moyen du passage de ladite porte de coffre (202) d'une condition fermée à une condition ouverte.

**5.** Plage arrière (100) selon une quelconque des revendications précédentes, dans laquelle ladite portion inclinable (114) est passée d'une condition inclinée à une condition non inclinée au moyen de la fermeture de ladite porte de coffre (202).

**6.** Plage arrière (100) selon une quelconque des revendications précédentes, dans lequel ladite portion inclinable (114) est divisée en deux sections au moyen d'un joint (116), de sorte qu'une première section (110) de ladite portion inclinable (114) est montée rotativement sur une seconde section (112) de ladite portion inclinable au niveau dudit joint (116).

**7.** Plage arrière (100) selon une quelconque des revendications précédentes, comprenant en outre un dispositif de verrouillage (118) agencé afin de verrouiller ladite portion inclinable (114) dans une condition non inclinée indépendamment de la condition de ladite porte de coffre (202).

**8.** Plage arrière (100) selon une quelconque des revendications précédentes, dans lequel ledit élément faisant ressort (122) est incorporé à l'intérieur de ladite plage arrière (100).

**9.** Plage arrière (100) selon une quelconque des revendications précédentes, dans lequel ledit élément faisant ressort (122) agit sur un moyen de réception de force (107, 507) par une force de compression F de manière à incliner ladite portion inclinable (114), de telle sorte que :

$$F = \frac{m \times g \times L}{W \times n}$$

dans laquelle :

F= force de compression dudit élément faisant ressort (122),
m= masse de ladite portion inclinable (114),
g= constante de la gravité,
L= longueur entre le centre de gravité de ladite portion inclinable (114) et ladite extrémité avant de ladite portion inclinable (114),
W= distance diagonale entre ledit raccordement par charnière de ladite portion inclinable et un point d'action entre ledit élément faisant ressort et ledit moyen de réception de force, et
n= nombre d'éléments faisant ressort (122).

**10.** Plage arrière (100) selon une quelconque des revendications précédentes, dans laquelle ledit élément faisant ressort (122) est un ressort à gaz (500).

**11.** Plage arrière (100) selon la revendication 10 en fonction de la revendication 9, dans laquelle ledit moyen de réception de force (507) est sur une surface au moins partiellement concave (508).

**12.** Plage arrière (100) selon une quelconque des revendications 1 à 9, dans lequel ledit élément faisant ressort (122) est un ressort de torsion (123).

**13.** Véhicule (300) pourvu d'une plage arrière (100) selon une quelconque des revendications précédentes.

**14.** Véhicule (300) selon la revendication 13, dans lequel ledit élément faisant ressort (122) est adapté afin d'incliner ladite portion inclinable (114) dans un mouvement plus lent qu'un mouvement de passage de ladite porte de coffre (202) d'une position fermée à une position ouverte.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102007005185 B